# EUROPÄISCHE PATENTSCHRIFT

(11) **EP 2 366 629 B1**
(45) Veröffentlichungstag und Bekanntmachung des Hinweises auf die Patenterteilung: **17.04.2013**
(21) Anmeldenummer: 11000608.7
(22) Anmeldetag: 26.01.2011
(51) Int. Cl.: B65B 35/16, B65B 43/44, B65B 43/46, B65G 47/90, B65G 59/02, B65G 61/00, B65G 65/02

(54) **Tuben-Übergabevorrichtung**
Tube transfer device
Dispositif de transmission de tubes

(30) Priorität: 02.03.2010 DE 102010009826
(43) Veröffentlichungstag der Anmeldung: 21.09.2011
(73) Patentinhaber: IWK Verpackungstechnik GmbH, 76297 Stutensee (DE)
(72) Erfinder: Kirsten, Matthias, 76344 Eggenstein (DE); Augenstein, Micha, 75210 Keltern (DE)
(74) Vertreter: Lasch, Hartmut

(56) Entgegenhaltungen:
- EP-A2- 0 163 201
- EP-B1- 1 170 216
- WO-A1-2008/040037
- GB-A- 1 279 486
- US-A1- 2005 028 495

## Beschreibung

Die Erfindung betrifft eine Tuben-Übergabevorrichtung gemäß dem Oberbegriff des Anspruchs 1.

Bei Betrieb einer üblichen Tubenfüllmaschine werden vorgefertigte Tubenrohlinge auf einer Fördervorrichtung zugeführt und jeweils in einen Tubenhalter eingesetzt, in dem sie die einzelnen Arbeitsstationen der Tubenfüllmaschine durchlaufen und insbesondere mit einem Produkt gefüllt und anschließend verschlossen werden. Jeder Tubenrohling besitzt die Grundform eines Zylinders und ist an seinem einen Ende mittels eines Verschlusses verschlossen und am entgegengesetzten Ende offen.

Die vorgefertigten Tubenrohlinge sind in enger Packung in einem Behälter, beispielsweise einem Karton, aufgenommen und müssen aus dem Behälter entnommen und auf die weiterführende Fördervorrichtung aufgelegt werden. Während diese Tätigkeit früher von Menschen manuell ausgeführt wurde, ist es seit einiger Zeit bekannt, diese sogenannte Tubenübergabe maschinell zu bewirken. Zu diesem Zweck ist es bekannt, in jede Tube einen Greifer einzuführen, der mit der jeweiligen Tube beispielsweise durch Unterdruck in Eingriff tritt. Der Greifer ist an einem verstellbaren Haltearm angeordnet und kann zusammen mit diesem verstellt werden. Durch Verstellung des Haltearms kann der Greifer mit dem darauf gehaltenen Tubenrohling aus dem Behälter entnommen und auf der Fördervorrichtung abgelegt werden.

Durch das Einführen des Greifers in den Tubenrohling besteht die Gefahr, dass in den Tubenrohling eine Verunreinigung eingebracht wird, was bei vielen Produkten nicht akzeptabel ist. Darüber hinaus besteht der Nachteil, dass die Tubenrohlinge exakt in vorbestimmter Ausrichtung zu der Tuben-Übergabevorrichtung angeordnet sein müssen, damit die Greifer ordnungsgemäß in die Tubenrohlinge einfahren können.

Aus der EP 1 170 216 B1 ist eine Tuben-Übergabevorrichtung gemäß dem Oberbegriff des Anspruchs 1 bekannt, bei der die Tuben auf der Außenseite der Tubenwandung erfasst und umgesetzt werden. Zu diesem Zweck ist ein Haltearm vorgesehen, der eine Vielzahl von Saugern trägt. Zur Übernahme der Tuben wird der Haltearm relativ zu dem die Tuben enthaltenen Behälter so ausgerichtet, dass jeweils immer zwei Sauger auf eine Tube aufgesetzt werden. Durch Aktivierung der Sauger werden die Tuben ergriffen und können durch Verfahren des Haltearms aus dem Behälter herausgenommen und auf der weiterführenden Fördervorrichtung abgelegt werden, von der sie in einem nachfolgenden Verfahrensschritt in die Tubenhalter eingesetzt werden. Nachteilig bei dieser Ausgestaltung ist einerseits der hohe konstruktive Aufwand aufgrund der Vielzahl der notwendigen Sauger und andererseits die Notwendigkeit, dass die relative Anordnung der Sauger genau an die Größe und die Anordnung der Tuben angepasst sein muss. Die Reihe der Tuben muss sehr gradlinig bzw. eben ausgerichtet sein, da etwas tiefer liegende Tuben von den Saugern nicht erreicht werden können. Darüber hinaus besteht die Gefahr, dass die Tuben infolge des einseitig einwirkenden Unterdrucks verformt und/oder durch die Sauger an ihrem außenseitig aufgebrachten Druckbild beschädigt werden.

Aus der WO 2008/040037 A1 ist eine Umsetzvorrichtung für Kartons bekannt, die ein umlaufendes Förderband aufweist, mit dem ein Karton über Reibungskräfte von einem Stapel abgenommen und weggeführt werden kann. Somit wirkt das Förderband als Adhäsionselement, das mit der Oberfläche des Kartons in Anlage gebracht werden kann.

Der Erfindung liegt die Aufgabe zugrunde, eine Tuben-Übergabevorrichtung in einer Tubenfüllmaschine zu schaffen, die einen konstruktiv einfachen Aufbau aufweist und mit der die Tuben unter Vermeidung von Verunreinigungen und Beschädigungen umgesetzt werden können. Außerdem sollen Tuben übergeben werden können, die in unebenen Reihen liegen.

Diese Aufgabe wird erfindungsgemäß durch eine Tuben-Übergabevorrichtung mit den Merkmalen des Anspruchs 1 gelöst. Dabei ist vorgesehen, dass die Eingriffsvorrichtung mehrere parallel nebeneinander angeordnete, streifenförmige Adhäsionselemente aufweist, die mittels eines Betätigungsteils verformbar und gegen die Wandung der Tube spannbar sind.

Erfindungsgemäß wird ebenfalls von der Grundüberlegung ausgegangen, zum Umsetzen der Tube nicht in diese hineinzugreifen, sondern die notwendige Umsetzkraft auf der Außenseite der Wandung der Tube aufzubringen. Dies erfolgt erfindungsgemäß durch Reibung, indem die Adhäsionselemente, die vorzugsweise aus einem weichen, stark adhäsiven Material und insbesondere Kunststoff besteht, mit der Außenseite der Tube in Anlage gebracht werden. Anschließend werden die Adhäsionselemente, die an dem verstellbaren Haltearm angebracht ist, so bewegt, dass auf die Tube über Reibung eine Kraft aufgebracht wird, durch die die Tube aus dem Behälter herausgezogen und auf die weiterführende Fördervorrichtung gelegt wird. Da die Adhäsionselemente relativ großflächig mit der Außenseite der Wandung der Tuben in Anlage kommen, ist eine Verformung der Tube oder eine Beschädigung des auf der Außenseite der Tube angebrachten Druckbildes vermieden.

Gemäß der Erfindung ist vorgesehen, dass mehrere streifenförmige Adhäsionselemente parallel nebeneinander angeordnet sind, so dass die Adhäsionselemente gemeinsam eine ebene Adhäsionsfläche bilden, die auf die Oberseite einer oberen Lage eines Tubenstapels aufgelegt werden kann, so dass die obere Lage des Tubenstapels in einem Arbeitsgang auf die weiterführenden Fördervorrichtung umgesetzt werden kann.

Die Adhäsionselemente sind vorzugsweise von einem ebenen Zuschnitt eines bahnförmigen, plattenförmigen oder mattenförmigen Materials gebildet. Dabei ist der Zuschnitt streifenförmig und insbesondere als schmaler dünner Streifen gebildet ist, der beim Umsetzen der Tube in deren Längsrichtung ausgerichtet ist.

In einer möglichen Ausgestaltung der Erfindung ist vorgesehen, dass die streifenförmigen Adhäsionselemente über ihre Länge einen konstanten Querschnitt besitzen. Bei bestimmten Anwendungen kann es notwendig sein, die Biegesteifigkeit der streifenförmigen Adhäsionselemente in bestimmten Bereichen herabzusetzen, um in diesen Bereichen eine stärkere Verformung bzw. eine größere Ausbauchung und somit ein definiertes Verformungsverhalten zu erzielen. Dies kann beispielsweise dadurch erreicht werden, dass die streifenförmigen Adhäsionselemente einen bereichsweise verringerten Querschnitt besitzen.

In bevorzugter Ausgestaltung der Erfindung ist vorgesehen, dass die Adhäsionselemente an einer gemeinsamen Trägerplatte gehalten sind, bei der es sich um eine dünne Platte aus Kunststoff oder Metall handeln kann. Jedes Adhäsionselement ist an seinem vorderen Ende fest mit der Trägerplatte verbunden und an seinem entgegengesetzten hinteren Ende an einem Verbindungsteil gehalten. Das Verbindungsteil ist mittels eines Betätigungsteils relativ zu der Trägerplatte verstellbar, so dass das Adhäsionselement gespannt und dadurch in gerader Ausrichtung auf der Trägerplatte ausgerichtet sein kann. Wenn das Betätigungsteil so bewegt wird, dass auf das Adhäsionselement eine Druckkraft ausgeübt wird, baucht dieses relativ zur Trägerplatte aus, wodurch es mit einer darunter liegenden Tube verspannt werden kann, so dass zwischen der Tube und dem Adhäsionselement eine Haftung bzw. Haftkraft besteht. Bei Verstellung des Adhäsionselements kann somit auf die Tube eine Zugkraft ausgeübt werden kann.

Durch die relativ starke Wölbung des Adhäsionselements und dessen flexible Anpassung an die Tuben können Unebenheiten in der Tubenreihe von bis zu einem halben Tubendurchmesser ausgeglichen werden.

In bevorzugter Ausgestaltung der Erfindung ist vorgesehen, dass für alle Adhäsionselemente ein gemeinsames Verbindungsteil vorgesehen ist, so dass die Adhäsionselemente synchron gespannt oder in ihren ausgebauchten Zustand gebracht werden.

Um die Tuben-Übergabevorrichtung für Tuben unterschiedlicher Größe verwenden zu können, ist es sinnvoll, die Länge des Abschnittes der Adhäsionselemente, der bei Aufbringung einer Druckkraft ausbaucht und mit der Außenseite der Tube in Anlage tritt, verändern zu können. Aus diesem Grunde kann in Weiterbildung der Erfindung vorgesehen sein, dass die Adhäsionselemente zwischen ihrem vorderen Ende und dem entgegengesetzen hinteren Ende an einem Zwischenauflager abgestützt ist. Das Zwischenauflager ist relativ zur Trägerplatte und insbesondere in Längsrichtung der Adhäsionselemente verstellbar. In einer möglichen Ausgestaltung der Erfindung kann vorgesehen sein, dass das Zwischenauflager einen Auflagerstab aufweist, der unter Bildung eines Spaltes parallel zur Plattenebene der Trägerplatte angeordnet ist, und dass die Adhäsionselemente durch den Spalt verlaufen. Um das Auftreten übermäßiger Reibungskräfte zwischen den Adhäsionselementen und dem Spalt bei Verformung des Adhäsionselemente durch die Aktivierung des Betätigungsteils zu verhindern, kann der Auflagerstab walzenförmig ausgebildet sein.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Seitenansicht der Tuben-Übergabevorrichtung vor Beginn der Tuben-Übergabe,
- Fig. 2: eine Seitenansicht der Eingriffsvorrichtung,
- Fig. 3: eine perspektivische Aufsicht auf die Eingriffsvorrichtung gemäß Figur 2,
- Fig. 4: eine perspektivische Unteransicht der Eingriffsvorrichtung gemäß Figur 2,
- Fig. 5: die Eingriffsvorrichtung gemäß Figur 2 mit verformten Adhäsionselementen,
- Fig. 6: eine perspektivische Aufsicht auf die Eingriffsvorrichtung gemäß Figur 5,
- Fig. 7: eine perspektivische Unteransicht der Eingriffsvorrichtung gemäß Figur 5,
- Fig. 8: die Tuben-Übergabevorrichtung gemäß Figur 1 während der Tuben-Übergabe,
- Fig. 9: die Tuben-Übergabevorrichtung gemäß Figur 8 bei Beendigung der Tuben-Übergabe,
- Fig. 10: eine Figur 4 entsprechende Unteransicht einer Eingriffsvorrichtung mit verstelltem Zwischenauflager und
- Fig. 11: eine Figur 7 entsprechende Unteransicht der Eingriffsvorrichtung mit verstelltem Zwischenauflager.

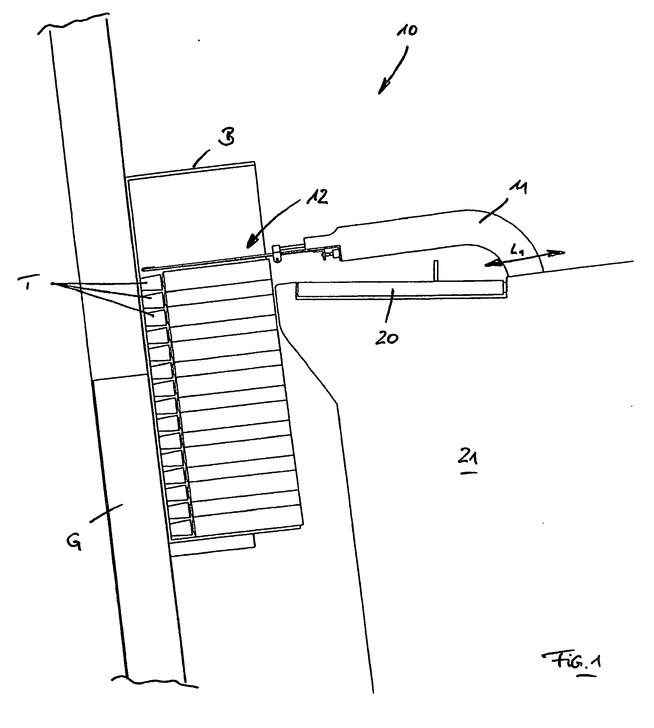

Eine in Figur 1 dargestellte Tuben-Übergabevorrichtung 10 besitzt einen auf einem Tisch 21 angebrachten Haltearm 11, der oberhalb einer am Tisch 21 gelagerten bandförmigen Fördervorrichtung 20 angeordnet ist und relativ zum Tisch 21 verstellt werden kann, wie es durch den Doppelpfeil L₁ angedeutet ist. Neben dem Tisch 21 ist in einem nicht näher dargestellten Gestell G ein Behälter B positioniert, in dem eine Vielzahl von lagenweise gestapelten Tuben bzw. Tubenrohlingen T angeordnet ist. An dem Haltearm 11 ist eine Eingriffsvorrichtung 12 angebracht, die in den Behälter B eingreift, sich auf die jeweils obere Lage der Tuben T auflegt und diese aus dem Behälter B herauszieht und auf die Fördervorrichtung 20 überführen kann.

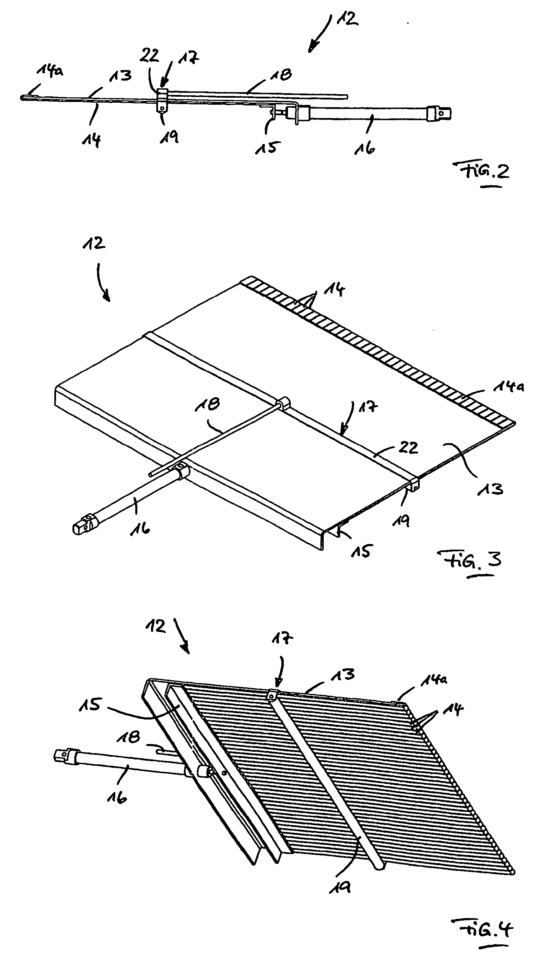

Die Eingriffsvorrichtung 12 ist in den Figuren 2 bis 4 näher dargestellt. Sie besitzt eine dünne, formstabile Trägerplatte 13 aus Metall oder Kunststoff, die an ihrem hinteren, gemäß Figur 2 rechten Ende ein Betätigungsteil 16 in Form einer Kolben-Zylinder-Einheit trägt. Auf der Unterseite der Trägerplatte 13 sind eine Vielzahl von streifenförmigen Adhäsionselementen 14 angeordnet, die aus einem flexiblem, weichen Kunststoff bestehen, der einen hohen Reibungskoefizienten besitzen sollte. Die streifenförmigen Adhäsionselemente 14 sind in engem Abstand parallel nebeneinander angeordnet, wie es in den Figuren 3 und 4 dargestellt ist, und erstrecken sich jeweils vom vorderen, gemäß Figur 2 linken Ende der Trägerplatte 13 zu deren gemäß Figur 2 rechten, hinteren Ende. An ihrem vorderen Ende 14a ist jedes streifenförmige Adhäsionselement 14 um die Kante der Trägerplatte 13 herumgeschlagen und an dieser befestigt. Die hinteren Enden der streifenförmigen Adhäsionselemente 14 sind an einem gemeinsamen stabförmigen Verbindungsteil 15 angebracht, das mit dem Betätigungsteil 16 verbunden ist und durch dieses verstellt werden kann. Wenn das Betätigungsteil 16 das Verbindungsteil 15 zu sich herangezogen hat, sind die streifenförmigen Adhäsionselemente 14 gespannt und liegen eng an der Unterseite der Trägerplatte an, wie es in den Figuren 2 bis 4 dargestellt ist.

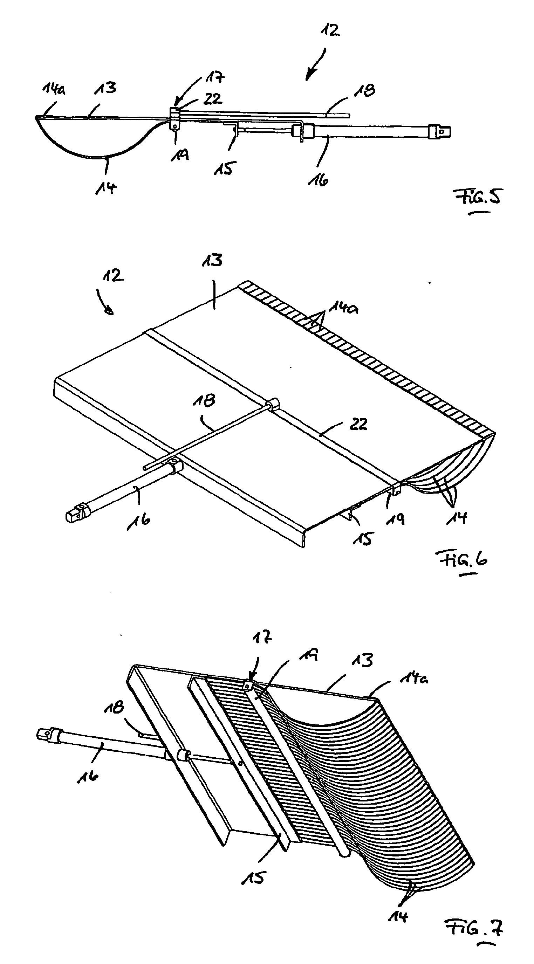

Wenn das Betätigungsteil 16 das Verbindungsteil 15 in Richtung des vorderen Endes der Trägerplatte 13 verstellt, d.h. von sich wegschiebt, werden die streifenförmigen Adhäsionselemente 14 gestaucht und weichen in Richtung der Unterseite der Trägerplatte 13 aus, wie es in den Figuren 6 und 7 dargestellt ist, d.h. sie bauchen aus.

Im mittleren Bereich der Trägerplatte 13 ist für die streifenförmige Adhäsionselemente 14 ein Zwischenauflagear 17 gebildet, das parallel zum Verbindungsteil 15 und senkrecht zu dessen Verstellrichtung verläuft. Das Zwischenauflager 17 umfasst einen auf der Oberseite der Trägerplatte 13 verlaufenden Bügel 22, der um die Seitenkanten der Trägerplatte 13 herumgeführt ist und eine auf der Unterseite der Trägerplatte 13 angeordneten walzenförmigen Auflagerstab 19 lagert, der unter Bildung eines Spaltes parallel zur Plattenebene der Trägerplatte 13 angeordnet ist, wobei die streifenförmigen Adhäsionselemente 14 jeweils durch den Spalt verlaufen, wie es in Figur 4 dargestellt ist.

Der Bügel 22 ist auf der Oberseite der Trägerplatte 13 mit einer Verstellstange 18 verbunden, die mit einer nicht dargestellten Betätigungseinheit gekoppelt ist. Mittels der Betätigungseinheit kann das Zwischenauflager 17 entlang der Trägerplatte 13 verstellt werden, wodurch für jedes streifenförmige Adhäsionselement 14 der Abstand zwischen seinem vorderen, an der Trägerplatte 13 fixierten Ende 14a und dem Zwischenauflager 17 verändert werden kann. Dadurch ändert sich auch die Länge des sich bei Verstellung des Verbindungsteils 15 verformenden Abschnitt der Adhäsionselemente 14.

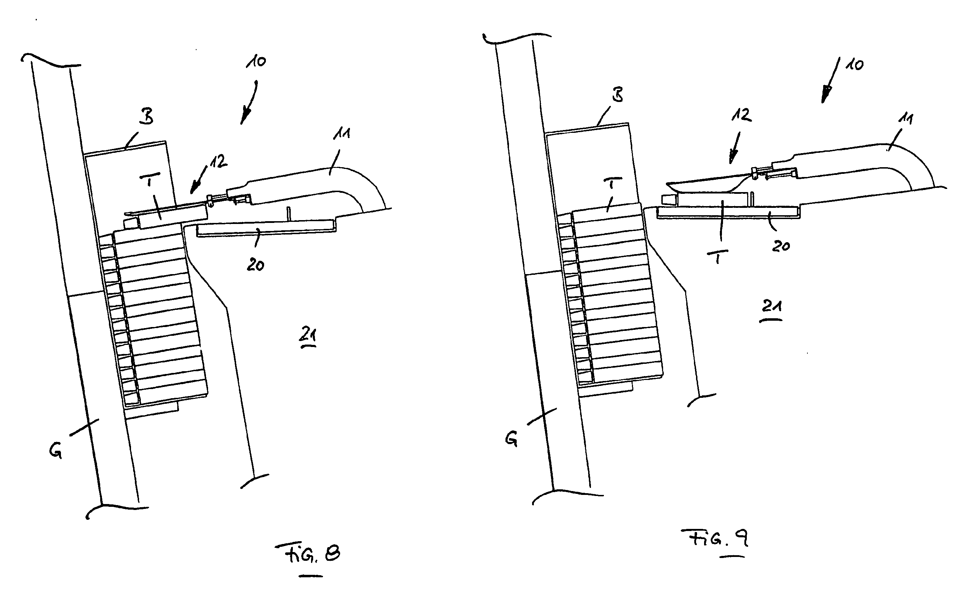

Im Folgenden wird ein Tuben-Übergabevorgang anhand der Figuren 1, 8 und 9 erläutert. Im Ausgangszustand befinden sich die streifenförmigen Adhäsionselemente 14 in ihrem durch das Verbindungsteil 15 gespannten Zustand, so dass sie eng an der Trägerplatte 13 anliegen. Dies ermöglicht es, die Trägerplatte 13 mit den unterseitig angeordneten streifenförmigen Adhäsionselementen 14 in den Behälter B oberhalb der oberen Tubenlage unter geringem Abstand zu den Tuben einzuführen, wie es in Figur 1 dargestellt ist. Anschließend wird das Betätigungsteil 16 aktiviert, so dass das Verbindungsteil 15 in Richtung des vorderen Endes der Trägerplatte 13 und der Adhäsionselemente 14 verstellt wird. Dies führt dazu, dass die streifenförmigen Adhäsionselemente 15 senkrecht zur Trägerplatte 13 nach unten ausweichen und sich auf die Oberseite der Wandung der Tuben T der oberen Tubenreihe auflegen. Da die obere Tubenreihe durch die darunter liegenden Tuben unterstützt ist, üben die verformten streifenförmigen Adhäsionselemente 14 eine Spannkraft auf die Tuben T aus. Dies führt zu relativ hohen Reibungskräften zwischen der Tubenwandung und den streifenförmigen Adhäsionselementen 14. Anschließend wird der Haltearm 11 zusammen mit der Eingriffsvorrichtung 12 von dem Behälter B weggefahren, wodurch die Tuben T der oberen Tubenreihe infolge der zwischen den Adhäsionselementen 14 und der Tubenwandung auftretenden Haft- und/oder Reibungskräfte aus dem Behälter herausgezogen werden, wie es in Figur 8 dargestellt ist. Am Ende der Bewegung sind die Tuben auf der bandförmigen Fördervorrichtung 20 angeordnet, wie es in Figur 9 dargestellt ist, und können mit dieser abtransportiert und weiterverarbeitet werden.

Wie die Figuren 5 bis 7 zeigen, verlaufen die streifenförmigen Adhäsionselemente 14 im verformten Zustand in ihrem Abschnitt zwischen dem Verbindungsteil 15 und dem Zwischenauflager 17 im wesentlichen gradlinig und eng anliegend an der Trägerplatte 13, während sie im Bereich zwischen dem Zwischenauflager 17 und ihrem vorderen Ende 14a nach unten verformt sind bzw. ausbauchen. Dabei ist die Größe der Verformung von dem Abstand zwischen dem Zwischenauflagaer 17 und dem vorderen Ende 14a der Adhäsionselemente 14 abhängig. Um die Tuben-Übergabevorrichtung 10 an verschiedene Tubenformate anpassen zu können, ist es möglich, den Abstand zwischen dem Zwischenauflager 17 und dem vorderen Ende 14a der Adhäsionselemente 14 zu verstellen, indem das Zwischenauflager 17 in beschriebener Weise verstellt wird.

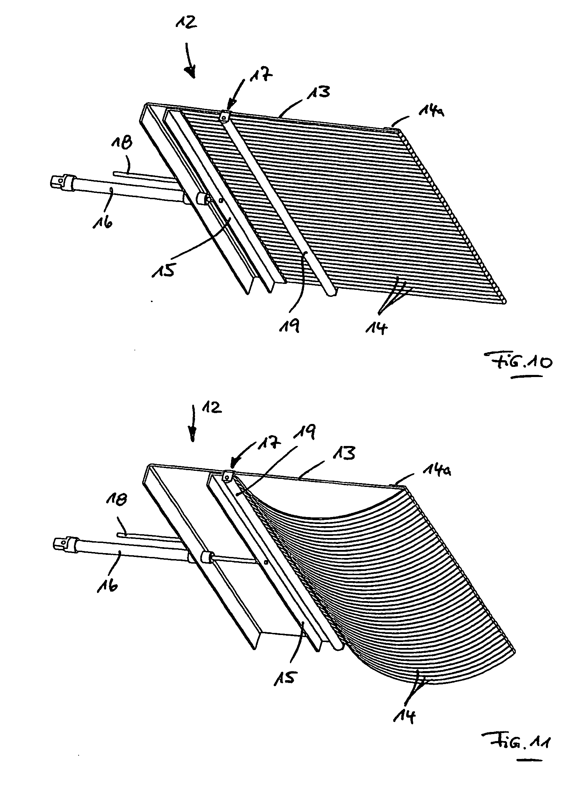

Die Figuren 10 und 11 zeigen einen Zustand, bei dem die verformbare Länge der streifenförmigen Adhäsionselemente 14 zwischen dem vorderen Ende 14a und dem Zwischenauflager 17 gegenüber dem in den Figuren 4 und 7 dargestellten Zustand vergrößert ist. Wenn die Adhäsionselemente 14 aus dem in Figur 10 gezeigten, gespannten Zustand durch Verstellen des stabförmigen Verbindungsteils 15 verformt werden und ausbauchen, wie es in Figur 11 dargestellt ist, ergibt sich ein anderes Verformungsbild als in dem in den Figuren 6 und 7 gezeigten Zustand, bei dem das Zwischenauflager 17 etwa in der Mitte der Trägerplatte 13 angeordnet ist. Durch Verlagerung des Zwischenauflagers 17 und somit durch Veränderung des Verformungsbildes der streifenförmigen Adhäsionselemente 14 ist eine Anpassung an die Länge und den Durchmesser der zu übergebenden Tuben möglich.

## Patentansprüche

1. Tuben-Übergabevorrichtung (10) in einer Tubenfüllmaschine, mit einem verstellbaren Haltearm (11), der zumindest eine Eingriffsvorrichtung (12) trägt, die mit der Außenseite der Wandung einer Tube (T) in Eingriff bringbar ist, wobei auf die Tube (T) über die Eingriffsvorrichtung (12) bei Verstellung des Haltearms (11) eine Umsetzkraft aufbringbar ist, **dadurch gekennzeichnet, dass** die Eingriffsvorrichtung (12) mehrere parallel nebeneinander angeordnete, streifenförmige Adhäsionselemente (14) aufweist, die mittels eines Betätigungsteils (16) verformbar und gegen die Wandung der Tube (T) spannbar sind.

2. Tuben-Übergabevorrichtung nach Anspruch 1, **dadurch gekennzeichnet, dass** die Adhäsionselemente (14) von einem ebenen Zuschnitt gebildet sind.

3. Tuben-Übergabevorrichtung nach Anspruch 1 oder 2, **dadurch gekennzeichnet, dass** die streifenförmigen Adhäsionselemente (14) über ihre Länge einen konstanten Querschnitt besitzen.

4. Tuben-Übergabevorrichtung nach Anspruch 1 oder 2, **dadurch gekennzeichnet, dass** die streifenförmigen Adhäsionselemente (14) einen bereichweise verringerten Querschnitt besitzen.

5. Tuben-Übergabevorrichtung nach einem der Ansprüche 1 bis 4, **dadurch gekennzeichnet, dass** die Adhäsionselemente (14) an einer gemeinsamen Trägerplatte (13) gehalten sind.

6. Tuben-Übergabevorrichtung nach Anspruch 5, **dadurch gekennzeichnet, dass** die Adhäsionselemente (14) an ihrem vorderen Ende (14a) mit der Trägerplatte (13) verbunden und an ihrem entgegengesetzten hinteren Ende an einem Verbindungsteil (15) gehalten sind.

7. Tuben-Übergabevorrichtung nach Anspruch 6, **dadurch gekennzeichnet, dass** das Verbindungsteil (15) mittels des Betätigungsteils (16) relativ zur Trägerplatte (13) verstellbar ist.

8. Tuben-Übergabevorrichtung nach Anspruch 6 oder 7, **dadurch gekennzeichnet, dass** für die Adhäsionselemente (14) ein gemeinsames Verbindungsteil (15) vorgesehen ist.

9. Tuben-Übergabevorrichtung nach einem der Ansprüche 1 bis 8, **dadurch gekennzeichnet, dass** die Adhäsionselemente (14) zwischen ihrem vorderen Ende (14a) und dem entgegengesetzten hinteren Ende an einem Zwischenauflager (17) abgestützt sind.

10. Tuben-Übergabevorrichtung nach Anspruch 9, **dadurch gekennzeichnet, dass** das Zwischenauflager (17) in Längsrichtung der Adhäsionselemente (14) verstellbar ist.

11. Tuben-Übergabevorrichtung nach Anspruch 9 oder 10, **dadurch gekennzeichnet, dass** das Zwischenauflager (17) einen Auflagerstab (19) aufweist, der unter Bildung eines Spaltes parallel zur Plattenebene der Trägerplatte (13) angeordnet ist, und dass die Adhäsionselemente (14) durch den Spalt verlangen.

12. Tuben-Übergabevorrichtung nach Anspruch 11, **dadurch gekennzeichnet, dass** der Auflagerstab (19) walzenförmig ist.

## Claims

1. A tube transfer device (10) in a tube filling machine, with an adjustable holding arm (11) which bears at least one engaging device (12), which may be brought into engagement with the outside of the wall of a tube (T), it being possible to apply a transfer force to the tube (T) via the engaging device (12) on adjustment of the holding arm (11), **characterised in that** the engaging device (12) comprises a plurality of strip-form adhesion elements (14) arranged parallel adjacent one another, which adhesion elements may be deformed by means of an actuating part (16) and may be clamped against the wall of the tube (T).

2. A tube transfer device according to claim 1, **characterised in that** the adhesion elements (14) are formed from a planar blank.

3. A tube transfer device according to claim 1 or claim 2, **characterised in that** the strip-form adhesion elements (14) have a constant cross-section over their length.

4. A tube transfer device according to claim 1 or claim 2, **characterised in that** the strip-form adhesion elements (14) have a reduced cross-section in places.

5. A tube transfer device according to any one of claims 1 to 4, **characterised in that** the adhesion elements (14) are held on a common support plate (13).

6. A tube transfer device according to claim 5, **characterised in that** the adhesion elements (14) are connected at their front end (14a) to the support plate (13) and are held at their opposing, rear end on a connecting part (15).

7. A tube transfer device according to claim 6, **characterised in that** the connecting part (15) is adjustable relative to the support plate (13) by means of the actuating part (16).

8. A tube transfer device according to claim 6 or claim 7, **characterised in that** a common connecting part (15) is provided for the adhesion elements (14).

9. A tube transfer device according to any one of claims 1 to 8, **characterised in that** the adhesion elements (14) are supported on an intermediate bearing means (17) between their front end (14a) and the opposing rear end.

10. A tube transfer device according to claim 9, **characterised in that** the intermediate bearing means (17) is adjustable in the longitudinal direction of the adhesion elements (14).

11. A tube transfer device according to claim 9 or claim 10, **characterised in that** the intermediate bearing means (17) comprises a bearing bar (19), which is arranged parallel to the plate plane of the support plate (13) and forms a gap, and **in that** the adhesion elements (14) extend through the gap.

12. A tube transfer device according to claim 11, **characterised in that** the bearing bar (19) is roller-shaped.

## Revendications

1. Dispositif de transfert de tubes (10) placé dans une machine de remplissage de tubes, avec un bras de maintien (11) mobile supportant au moins un dispositif de préhension (12) pouvant être mis en prise avec le côté extérieur de la paroi d'un tube (T), une force de déplacement pouvant être appliquée sur le tube (T) par le biais du dispositif de préhension (12) en déplaçant le bras de maintien (11), **caractérisé en ce que** le dispositif de préhension (12) comporte plusieurs éléments d'adhésion (14) en forme de bande disposés côte à côte dans un plan parallèle et pouvant être déformés à l'aide d'une partie d'actionnement (16) et serrés contre la paroi du tube (T).

2. Dispositif de transfert de tubes selon la revendication 1, **caractérisé en ce que** les éléments d'adhésion (14) sont formés par un détouré plan.

3. Dispositif de transfert de tubes selon la revendication 1 ou 2, **caractérisé en ce que** les éléments d'adhésion (14) en forme de bande présentent une section transversale constante sur l'ensemble de leur longueur.

4. Dispositif de transfert de tubes selon la revendication 1 ou 2, **caractérisé en ce que** les éléments d'adhésion (14) en forme de bande présentent une section transversale partiellement réduite.

5. Dispositif de transfert de tubes selon l'une quelconque des revendications 1 à 4, **caractérisé en ce que** les éléments d'adhésion (14) sont maintenus au niveau d'une plaque de support (13) commune.

6. Dispositif de transfert de tubes selon la revendication 5, **caractérisé en ce que** les éléments d'adhésion (14) sont reliés à la plaque de support (13) au niveau de leur extrémité avant et sont maintenus au niveau d'une partie de jonction (15) prévue au niveau de l'extrémité arrière opposée.

7. Dispositif de transfert de tubes selon la revendication 6, **caractérisé en ce que** la partie de jonction (15) peut être déplacée par rapport à la plaque de support (13) par le biais de la partie d'actionnement (16).

8. Dispositif de transfert de tubes selon la revendication 6 ou 7, **caractérisé en ce qu'**une partie de jonction (15) commune est prévue pour les éléments d'adhésion (14).

9. Dispositif de transfert de tubes selon l'une quelconque des revendications 1 à 8, **caractérisé en ce que** les éléments d'adhésion (14) sont maintenus contre une butée intermédiaire (17) placée entre leur extrémité avant (14a) et l'extrémité arrière opposée.

10. Dispositif de transfert de tubes selon la revendication 9, **caractérisé en ce que** la butée intermédiaire (17) peut être déplacée dans le sens de la longueur des éléments d'adhésion (14).

11. Dispositif de transfert de tubes selon la revendication 9 ou 10, **caractérisé en ce que** la butée intermédiaire (17) comporte une tige de butée (19) disposée parallèlement au plan de plaque de la plaque de support (13) par le biais de la formation d'une fente et que les éléments d'adhésion (14) cherchent à passer au travers de la fente.

12. Dispositif de transfert de tubes selon la revendication 11, **caractérisé en ce que** la tige de butée (19) prend une forme de rouleau.
